# EUROPEAN PATENT APPLICATION

(11) **EP 2 138 469 A1**
(43) Date of publication of application: **30.12.2009**
(21) Application number: 09163449.3
(22) Date of filing: 23.06.2009
(51) Int. Cl.: C03B 33/033, C03B 33/037, C03B 33/07, C03B 33/02

(54) **Sheet glass break method and machine**

(30) Priority: 25.06.2008 IT TO20080497
(71) Applicant: Bottero S.p.A., 12100 Cuneo (IT)
(72) Inventor: Margaria, Pierfranco, 10094 Valgioie (IT)
(74) Representative: Jorio, Paolo

(57) **Abstract**

A method and machine (1) whereby a sheet (2) of glass, held on a table (5) of the machine (1), is first scored to form at least one score line (L), and is then broken along the score line (L) by transmitting vibratory action to the sheet (2), about the score line (L).

## Description

The present invention relates to a method of breaking sheet glass.

To break sheet glass, the sheet is first scored and then broken along the score line by applying pressure to curve the sheet locally along the score line. Pressure is exerted mechanically using break wheels forced against the sheet and rolled along the score line, or using break bars forced gradually onto the sheet.

The above break methods provide for breaking sheets of various sizes, but does not guarantee the same quality in terms of surface finish or consistent shape, regardless of sheet thickness.

That is, the above method necessarily involves mechanical deformation of the sheet and so produces stress in the glass, thus resulting in products with jagged edges or splinters. In some cases, the break may be out of square with the wide faces of the sheet and so require machining.

In many cases, therefore, the broken sheets cannot be salvaged and must be rejected, thus resulting in production losses and unacceptably high end costs.

Moreover, sheets of over six-eight millimetres in thickness call for considerable pressure, which means difficulty in controlling the break process and, above all, using special-purpose and, in particular, reinforced supporting structures and components to ensure the necessary dimensional stability.

Finally, the above break method makes painstaking work of producing small-size pieces, and makes it extremely difficult to break the sheet along score lines close to the edge of the sheet.

It is an object of the present invention to provide a method of breaking sheet glass along predetermined lines, designed to provide a straightforward, low-cost solution to the above problems.

According to the present invention, there is provided a method of breaking sheet glass, the method comprising the steps of forming at least one score line on the sheet of glass, and breaking the sheet of glass along said score line; and being characterized in that said breaking comprises the step of stressing said sheet of glass by vibratory breaking action.

The present invention also relates to a machine for breaking sheet glass.

According to the present invention, there is provided a machine for breaking sheet glass, as claimed in Claim 14.

A non-limiting embodiment of the invention will be described by way of example with reference to the accompanying drawings, in which:
Figure 1 shows, schematically and substantially in block form, a machine for scoring and breaking sheet glass in accordance with the teachings of the present invention;
Figures 2 to 5 show larger-scale details of the Figure 1 machine;
Figure 6 shows a variation of a detail in Figures 4 and 5;
Figure 7 shows a variation of a detail in Figure 2.

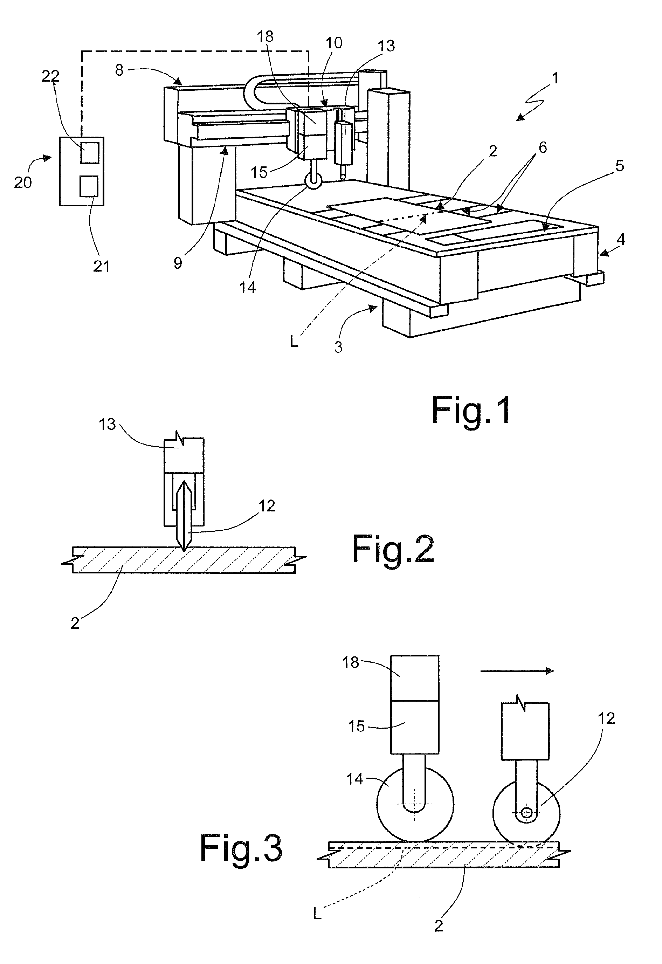

Number 1 in Figure 1 indicates as a whole a machine for breaking a sheet 2 of glass along predetermined lines.

Machine 1 comprises a frame 3; and a supporting structure 4 fitted to frame 3 and for supporting and retaining the work sheet 2 substantially horizontally. In the example described, structure 4 defines a table 5, on which the sheet rests directly, as on conventional score and/or break tables, or with the interposition of elastomeric structures comprising spot or elongated projections distributed over table 5 to respectively form a spot mesh and a grille indicated as a whole by 6. Alternatively, sheet 2 is retained by grippers connected to supporting structure 4 and engaging one or more edges of sheet 2 to retain sheet 2 in a break position, in which sheet 2 is at least partly raised off table 5 or at least partly forced against table 5.

Machine 1 also comprises a known powered cutting bridge 8 fitted in known manner to structure 4 to move back and forth longitudinally, and which is fitted integrally with a slideway 9 parallel to table 5 and along which a known powered carriage 10 slides axially back and forth.

Carriage 10 supports a known score wheel 12 for forming a score line L on sheet 2, and which is moved with respect to carriage 10 to and from sheet 2 by a linear actuator 13; and a break wheel 14 separate from and independent of score wheel 12.

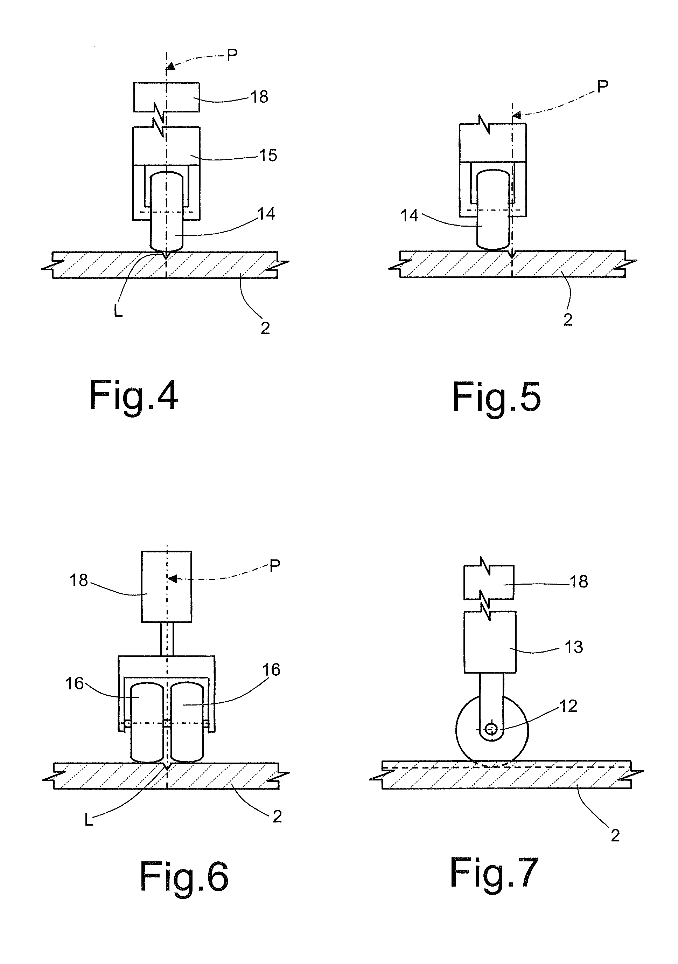

Break wheel 14 is located in tandem with, i.e. behind or in front of, score wheel 12, as shown in Figures 1 and 3, is fitted in sliding manner to carriage 10, and is moved, independently of score wheel 12, to and from table 5 and, hence, sheet 2 by a respective known linear actuator 15. When positioned contacting sheet 2, break wheel 14 is located at or over score line L, as shown in Figure 4, or to one side of a plane P perpendicular to sheet 2 and through score line L, as shown in Figure 5.

Alternatively, in the Figure 6 variation, break wheel 14 is replaced by two coaxial, side by side break wheels 16, which are positioned, in use, astride score line L and contacting intermediate portions of sheet 2 on opposite sides of plane P.

In all the solutions described, a vibrating, e.g. electromagnetic vibrating, device 18 is located between carriage 10 and break wheel/s 14, 16, to produce a pulsating or oscillating vibratory movement of break wheel/s 14, 16 with respect to sheet 2, and with a law of motion, e.g. sinusoidal, pulsating or trapezoidal, that varies according to the characteristics and material of the sheets.

In actual use, score line L is formed in known manner in sheet 2 by score wheel 12. Once the sheet is scored, break wheel/s 14, 16 are moved onto sheet 2, and vibrating device 18 is immediately activated to transmit vibratory breaking action to sheet 2 and in particular to the area of sheet 2 in which score line L is formed. If a single break wheel 14 is used, vibratory breaking action is exerted directly on or at score line L, as shown in Figure 4, or on an area of sheet 2 alongside score line L and to one side of plane P, as shown in Figure 5. If two break wheels 16 are used, vibratory breaking action is exerted simultaneously on both sides of plane P.

Whatever the break wheel type or arrangement with respect to score line L, as the break wheel/s 14, 16 move along, vibratory action is transmitted to sheet 2 to gradually and simultaneously break sheet 2 along score line L.

To achieve all-round scoring and breaking performance of machine 1, i.e. to enable it to score and break sheets of any shape and thickness, device 18 also comprises an adjusting and/or calibrating module 20 which, given the geometry of the work sheet 2 and the pieces to be cut, and/or the constraints of sheet 2 on structure 4, i.e. the way in which sheet 2 is supported on machine 1, enables a specific vibratory action to be selected from a number of vibratory actions stored in a memory block 21 of device 18. A further block 22 of device 18 provides for further modifying the selected vibratory action by modifying one or more parameters or characteristics, such as frequency, conveniently within a range of 5 to 3000 Hz.

In a different operating mode, as score wheel 12 moves along, break wheel/s 14, 16 are lowered and vibrating device 18 is activated to break sheet 2 at the same time, or just after, the score line is formed.

In the Figure 7 variation, machine 1, shown partly, has no break wheels 14, 16, and sheet 2 is broken using score wheel 12 itself. Accordingly, vibrating device 18, formerly interposed between carriage 10 and break wheels 14, 16, is now interposed between score wheel 12 and carriage 10, so that vibratory breaking action is transmitted to sheet 2 by score wheel 12 and therefore simultaneously with the formation of score line L.

In another variation, not shown, as opposed to being fitted to carriage 10, break wheel/s 14, 16 together with actuators 15 and vibrating device 18 are fitted to a similar carriage, that also runs along a slideway parallel to the guide 9 and fitted to a bridge, in turn fitted to structure 4, but underneath table 5. The wheels underneath table 5, and therefore sheet 2, break the sheet in the same way as described above, but by transmitting vibratory action to the opposite face of the sheet to that in which score line L is formed.

Machine 1 described therefore provides, on the one hand, for greatly reducing sheet breaking time and, on the other, for automatically cutting pieces of any shape and size, and particularly curved pieces, all of the same quality in terms of surface finish and consistent shape, regardless of the thickness and size of the work sheet and/or the pieces to be cut.

This is substantially due to subjecting the work sheet to continuous or pulsating vibratory action, i.e. of a given frequency and amplitude, that breaks the sheet along the area weakened by the score line or an instantaneous break initiator, as in the case of simultaneous scoring-breaking.

This is mainly due to the vibratory action transmitted to the sheet eliminating or drastically reducing flexing of the sheet - currently the basis of all known break methods - and so drastically reducing stress in the sheet, so that the break method is easily controllable. Moreover, by eliminating mechanical flexing, the structure of the machine is greatly simplified as compared with known solutions.

From the operating standpoint, using vibratory action as a break "tool", pieces of any, and in particular small, size can be produced, and, above all, the sheet can be broken easily even along score lines close to the edge of the work sheet.

Clearly, changes may be made to the break method and machine 1 as described herein without, however, departing from the scope defined in the accompanying Claims.

In particular, the vibratory stress transmitted to the work sheet, and the way in which the work sheet is supported on the machine, at least at the break stage, may differ from those described by way of example. That is, when transmitting vibratory action to the sheet, the sheet may be maintained at least partly raised off the table, or at least a portion of the sheet may be pushed against the table, e.g. by means of grippers or straightforward pushers or linear actuators.

Finally, the machine described may have no score wheel, and only comprise the break wheel or other equivalent break member, such as a break bar, associated with the vibrating device to break sheets scored beforehand at a separate or adjacent scoring station.

Clearly, the break method described of transmitting vibratory action to the sheet may also be implemented on vertical break machines, on which the work sheet is positioned substantially on edge, or even on twin-bridge machines for scoring and/or simply breaking multilayer sheets, i.e. sheets comprising two lateral sheets of glass with a sheet of synthetic material in between. In which case, the break method described is applied simultaneously or successively to each of the two lateral sheets of glass.

## Claims

1. A method of breaking sheet glass, the method comprising the steps of forming at least one score line on the sheet of glass, and breaking the sheet of glass along said score line; and being **characterized in that** said breaking comprises the step of stressing said sheet of glass by vibratory breaking action.

2. A method as claimed in Claim 1, **characterized by** varying at least one characteristic of said vibratory action at least as a function of the geometry of the work sheet.

3. A method as claimed in Claim 1, **characterized by** varying at least one characteristic of said vibratory action as a function of the constraints retaining said sheet of glass at a break station.

4. A method as claimed in Claim 1, **characterized by** varying at least one characteristic of said vibratory action as a function of the way in which said sheet of glass is supported at a break station.

5. A method as claimed in any one of the foregoing Claims, **characterized in that** said characteristic that is varied is an oscillating frequency or amplitude.

6. A method as claimed in any one of the foregoing Claims, **characterized in that** at least part of said vibratory action is imparted simultaneously with formation of said score line.

7. A method as claimed in Claim 6, **characterized in that** said vibratory action is imparted after said score line is completed.

8. A method as claimed in any one of the foregoing Claims, **characterized in that** said vibratory action is imparted by acting near or on said score line.

9. A method as claimed in any one of the foregoing Claims, **characterized in that** said vibratory action is imparted by acting on at least a portion of said sheet of glass located to one side of a plane perpendicular to said sheet of glass and through said score line.

10. A method as claimed in Claim 9, **characterized in that** said vibratory action is imparted by acting simultaneously on portions of said sheet of glass located on opposite sides of said plane perpendicular to said sheet of glass and through said score line.

11. A method as claimed in any one of the foregoing Claims, **characterized in that** said vibratory action is imparted by the same scoring means used to form said score line.

12. A method as claimed in any one of the foregoing Claims, **characterized in that** said vibratory action is imparted using breaking means separate from and independent of the scoring means used for said scoring.

13. A method as claimed in Claim 12, **characterized in that** said vibratory action is imparted by moving said breaking means over or near said score line.

14. A machine for breaking sheet glass, the machine comprising breaking means for breaking said sheet along a score line formed in said sheet; and being **characterized in that** said breaking means comprise vibrating means for imparting vibratory action to the work sheet.

15. A machine as claimed in Claim 14, **characterized by** comprising adjusting means for varying at least one characteristic of said vibratory action at least as a function of the geometry of the work sheet or the constraints retaining said glass sheet on the machine.

16. A machine as claimed in Claim 14 or 15, **characterized in that** said vibrating means are associated with a break member positioned, in use, substantially contacting said sheet.

17. A machine as claimed in one of Claims 14 to 16, **characterized in that** breaking means comprise scoring means for forming said score line and breaking said sheet; said vibrating means transmitting said vibratory action to said sheet via said scoring means.
